Europäisches Patentamt

European Patent Office

Office européen des brevets

(11) Publication number: **0 048 114**
**A1**

# (12) EUROPEAN PATENT APPLICATION

(21) Application number: **81304035.9**

(22) Date of filing: **03.09.81**

(51) Int. Cl.³: **C 09 D 3/82**

(30) Priority: **12.09.80 GB 8029604**

(43) Date of publication of application:
**24.03.82 Bulletin 82/12**

(84) Designated Contracting States:
**DE FR GB IT**

(71) Applicant: **Dow Corning Limited**
**Cardiff Road Barry**
**South Glamorgan CF6 7YL Wales(GB)**

(72) Inventor: **Cooper, Bryan Ewart**
**10, Chelsea Avenue Cefn Glas**
**Bridgend South Glamorgan Wales(GB)**

(72) Inventor: **Butler, Derek William**
**3, Evans Street**
**Barry South Glamorgan Wales(GB)**

(74) Representative: **Walbeoff, William John**
**Dow Corning Limited Cardiff Road Barry**
**South Glamorgan CF6 7YL Wales(GB)**

(54) Siloxane resin compositions and preparation and use.

(57) An aqueous composition comprising a dispersion of colloidal silica in a solution in water and a water-miscible solvent of the partial condensate of a silanol R Si(OH)₃, where R is e.g. lower alkyl, vinyl or phenyl, is catalysed by the addition of from 0.1 to 0.5% by weight of stannous octoate. The composition preferably also contains acetic acid.

Useful for providing abrasion-resistant coatings on metals and other substrates.

EP 0 048 114 A1

Croydon Printing Company Ltd.

## SILOXANE RESIN COMPOSITIONS AND PREPARATION AND USE

This invention relates to siloxane compositions and to the use of such compositions for the production of abrasion-resistant coatings.

It is known from U.K. Patent No. 1,454,960 that protective abrasion-resistant coatings may be obtained by coating solid substrates with a composition comprising a dispersion of colloidal silica in a $C_1$ - $C_4$ aliphatic alcohol-water solution of the partial condensate of a silanol. It is disclosed in the said U.K. Patent that certain catalysts may be added to the compositions so that milder curing conditions can be employed to obtain optimum abrasion resistance in the final coating. Although such catalysts are effective in reducing the temperature and/or time required to obtain cured coatings their use can affect the ability of the coating to protect metals and other substrates against corrosive environments.

According to this invention there is provided a curable siloxane resin composition comprising a dispersion of colloidal silica in a solution in water and a water-miscible organic solvent of the partial condensate of a silanol of the formula $R\,Si(OH)_3$ in which R is an alkyl radical having from 1 to 3 inclusive carbon atoms, the vinyl radical, the phenyl radical, the 3.3.3.-trifluoropropyl radical, the gamma-glycidoxypropyl radical or the gamma-methacryloxypropyl radical, said water-miscible organic solvent being selected from $C_1$ - $C_4$ aliphatic alcohols, ketones, esters, glycols, glycol ethers and glycol esters and at least 70 weight per cent of the silanol being $CH_3Si(OH)_3$, said dispersion containing from 10 to 50 weight per cent solids, said solids consisting essentially of 10 to 70 weight per cent of colloidal silica and 30 to 90 weight per cent of the partial condensate, said dispersion containing sufficient acid to

- 2 -

provide a pH in the range of 3.0 to 6.0; there being in said dispersion from 0.1 to 0.5 per cent by weight, based on the solids content of the composition, of stannous octoate.

Also included within the scope of this invention is a process for preparing said curable compositions and the use of such compositions for the coating of solid substrates.

The compositions of this invention comprise a dispersion of colloidal silica in a solution in water and a water-miscible organic solvent of the partial condensate of a silanol, into which stannous octoate has been incorporated. The dispersions can be readily prepared by adding one or more trialkoxysilanes, for example R Si(OCH$_3$)$_3$ in which R is as defined hereinabove, to colloidal silica hydrosols and adjusting the pH of the resulting composition to a value within the range from 3.0 to 6.0. Alcohol is generated by the hydrolysis of the alkoxy substituents of the silane. Depending on the solvent system and content of solids desired in the final composition additional water and/or water-miscible solvents may be added. Examples of such solvents are methanol, isopropanol, ethylene glycol, diethylene glycol, ethylene glycol monomethyl ether, diethylene glycol dimethyl ether, ethylene glycol monoacetate, diethylene glycol monoethylether acetate, 2-hydroxyethyl acetate, acetone, methyl isobutyl ketone and ethyl acetate. The dispersion component of the compositions of this invention and methods for the preparation thereof are described in detail in U.K. Patent No. 1,454,960 the disclosure of which is incorporated herein by reference. When preparing such dispersions, however, it is preferred that the acid employed to adjust the pH be other than acetic acid. If acetic acid is employed it should be present in limited proportions as

- 3 -

discussed hereinafter.

Incorporation of the stannous octoate into the dispersion to form the compositions of this invention can be achieved by simple addition and mixing. In view of the relatively small proportions employed, that is from 0.1 to 0.5 per cent by weight based on the weight of non-volatile solids, the stannous octoate is more easily dispersed if added as a solution in a diluent. It has also been found advantageous to incorporate into the resin composition a proportion of acetic acid as this additional component can result in a significant increase in the bath life of the compositions. The proportion of acetic acid employed should not exceed 2.5 parts by weight per part by weight of stannous octoate. The acetic acid component may be present as all or part of the acid employed to adjust the pH of the dispersion within the specified limits. A more preferred method of forming the curable composition, however, is to employ a dispersion in which the pH has been adjusted employing an acid other than acetic acid. The acetic acid and stannous octoate may then be mixed and added together, preferably in conjunction with an organic diluent which is miscible with the dispersion of silica and silanol. By combining the acetic acid and stannous octoate in a single package the curable composition may be stored and supplied as a two package product ready for mixing just prior to use.

When it is desired to store the mixture of stannous octoate and acetic acid for extended periods, for example for one month or more, we prefer to incorporate into the mixture a small proportion of an antioxidant. Suitable antioxidants include hydroquinone, catechol, resorcinol, pyrogallol and phloroglucinol. The proportion of antioxidant required to obtain the desired shelf (storage) stability of the mixture will depend, for example, on the nature

- 4 -

of the antioxidant. In general we prefer to employ from about 0.005 to 0.025 parts of antioxidant per part of stannous octoate. A preferred mixture for use in forming the curable compositions of this invention therefore comprises by weight (a) one part of stannous octoate (b) acetic acid in a proportion of up to 2.5 parts, (c) from 0.005 to 0.025 part, preferably 0.008 to 0.012 part, of antioxidant, and (d) from 5 to 20 parts of an organic diluent.

The curable compositions of this invention may be employed to provide abrasion-resistant coatings on a variety of solid substrates, for example metals, wood and plastics. They are curable at temperatures as low as 80°C or below and therefore exhibit improved curing properties over the uncatalysed dispersions. Coatings prepared from the compositions of this invention also have improved resistance to corrosive environments when compared with dispersions catalysed according to prior art proposals.

The invention is illustrated by the following Examples in which the parts are expressed by weight.

Example 1

Twenty parts of methyltrimethoxysilane were added to a stirred aqueous dispersion of colloidal (13-14 millimicron) silica (30 parts). After removal of some of the water and methanol sufficient methyl cellosolve was added to provide a dispersion containing 30% by weight total solids.

Samples of the dispersion prepared as described above were each catalysed by the addition of a tin carboxylate, Samples A to C being catalysed with 0.5% by weight of dibutyltin dilaurate, dibutyltin diacetate and dimethyltin dineodecanoate respectively and Sample D with 0.08% by weight of stannous octoate. The samples were employed to coat degreased aluminium plates by dipping and the coated plates placed in an oven. It was found that all of the coatings cured to hard films (about 5 microns thickness) during 3 hours at 80°C or 4 minutes at 150°C.

The resistance of the cured films to a corrosive environment was then tested by placing the coated panels in concentrated (36.5%) hydrochloric acid. The films of Samples A to C blistered and lifted from the panels in about 1 - 1.5 minutes whereas the film of Sample D remained intact for 2.5 minutes.

Example 2

A catalyst solution was prepared by mixing

| | | |
|---|---|---|
| stannous octoate | 8 | parts |
| glacial acetic acid | 15 | parts |
| propylene glycol monomethyl ether | 76.9 | parts |
| catechol | 0.1 | part |

One part of this solution was then mixed with 100 parts of the dispersion prepared as described in Example 1 and the mixture employed to coat degreased aluminium panels by dipping. It was found that the applied coatings cured to a hard film (5 microns thick) on exposure to 150°C for 4 minutes and resisted exposure to concentrated hydrochloric acid for 2.5 minutes. Similarly coated panels were exposed to a spray of aqueous sodium chloride solution containing 2.5% by weight of sodium chloride. No corrosion of the metal panel was detected after 3,000 hours exposure at room temperature.

The catalysed dispersion remained useable for more than 8 hours whereas a similarly catalysed dispersion not containing acetic acid became unuseable in less than 3 hours.

The catalyst solution was still effective after storage for about 40 days. When the catechol was omitted the catalyst solution remained effective for about 36 hours.

CLAIMS

1.    A curable siloxane resin composition comprising a dispersion of colloidal silica in a solution in water and a water-
miscible organic solvent of the partial condensate of a silanol
of the formula $R Si(OH)_3$ in which R is an alkyl radical having
from 1 to 3 inclusive carbon atoms, the vinyl radical, the
phenyl radical, the 3.3.3.-trifluoropropyl radical, the gamma-
glycidoxypropyl radical or the gamma-methacryloxypropyl radical,
said water-miscible organic solvent being selected from
$C_1$ - $C_4$ aliphatic alcohols, ketones, esters, glycols, glycol
ethers and glycol esters and at least 70 weight per cent of the
silanol being $CH_3Si(OH)_3$ , said dispersion containing from 10
to 50 weight per cent solids, said solids consisting essentially
of 10 to 70 weight per cent of colloidal silica and 30 to 90
weight per cent of the partial condensate, said dispersion
containing sufficient acid to provide a pH in the range of 3.0
to 6.0; there being present in said dispersion from 0.1 to 0.5
per cent by weight, based on the solids content of the composition, of stannous octoate.

2.    A composition as claimed in Claim 1 which also contains
acetic acid in a proportion of up to 2.5 parts by weight per
part by weight of stannous octoate.

3.    A process for preparing a curable siloxane resin composition, as claimed in Claim 1, which comprises mixing a composition comprising a dispersion of colloidal silica in a solution
in water and a water-miscible organic solvent of the partial
condensate of a silanol of the formula $R Si(OH)_3$ in which R is
an alkyl radical having from 1 to 3 inclusive carbon atoms,
the vinyl radical, the phenyl radical, the 3.3.3.-trifluoropropyl radical, the gamma-glycidoxypropyl radical or the gamma-
methacryloxypropyl radical, said water-miscible organic solvent being selected from $C_1$ - $C_4$ aliphatic alcohols, ketones, esters, glycols, glycol ethers and glycol esters and at least 70 weight per cent of the silanol being $CH_3Si(OH)_3$ , said dispersion containing from 10 to 50 weight per cent solids, said solids consisting essentially of 10 to 70 weight per cent of colloidal silica and 30 to 90 weight per cent of the partial condensate and said dispersion containing sufficient acid to provide a pH in the range from 3.0 to 6.0; and a composition comprising a mixture containing by weight  (a) 1 part of stannous octoate,  (b) acetic acid in a proportion of up to 2.5 parts,  (c) from 0.005 to 0.025 part of an antioxidant, and (d) from 5 to 20 parts of an organic diluent.

4.   A process for coating a surface which comprises applying thereto a composition as claimed in Claim 1 or Claim 2 and thereafter curing the applied composition.

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 2 036 053 (GENERAL ELECTRIC)  * claim 1; page 3, lines 9-11 and 19-20 *· · --- | 1 | C 09 D 3/82 |
| | GB - A - 2 036 771 (GENERAL ELECTRIC)  * claim 1; page 3, line 30 * --- | 1 | |
| P | GB - A - 2 062 662 (GENERAL ELECTRIC)  * claim 1; page 4, line 20 * --------- | 1 | **TECHNICAL FIELDS SEARCHED (Int. Cl.³)**  C 09 D 3/82 |

CATEGORY OF
CITED DOCUMENTS

X: particularly relevant

A: technological background

O: non-written disclosure

P: intermediate document

T: theory or principle underlying
the invention

E: conflicting application

D: document cited in the
application

L: citation for other reasons

&. member of the same patent
family,
corresponding document

| The present search report has been drawn up for all claims | | |
|---|---|---|
| Place of search  The Hague | Date of completion of the search  09-12-1981 | Examiner  DEPYPER |